Europäisches Patentamt

European Patent Office

Office européen des brevets

(11) Publication number: **0 330 815**
**A2**

## EUROPEAN PATENT APPLICATION

(21) Application number: **89100419.4**

(22) Date of filing: **11.01.89**

(51) Int. Cl.⁴: **G01P 3/488**

(30) Priority: **28.01.88 JP 17855/88**

(43) Date of publication of application:
**06.09.89 Bulletin 89/36**

(84) Designated Contracting States:
**ES FR GB**

(71) Applicant: **MITSUBISHI DENKI KABUSHIKI KAISHA**
**2-3, Marunouchi 2-chome Chiyoda-ku**
**Tokyo 100(JP)**

(72) Inventor: **Amano, Yoshikazu c/o Itami Jigyosho Mitsubishi**
**Denki KK 1-1, Tsukaguchi-hinmachi 8-chome**
**Amagasaki-shi, 661(JP)**

(74) Representative: **Kuhnen, Wacker & Partner**
**Schneggstrasse 3-5 Postfach 1553**
**D-8050 Freising(DE)**

(54) Protective case of tachometer generator.

(57) In a tachometer generator, which has a permanent magnet (3) in a yoke having a pair of iron pole pieces (5a, 5b) with coils (6a, 6b) wound thereon and is mounted on a gear box (2) having a driving gear (4) therein, a non-magnetic cover (7) is provided to the gear box (2) so as to cover the sensing elements consisting of the iron pole pieces (5a, 5b) and coils (6a, 6b), and the sensing elements of the tachometer generator is protected from lubrication oil and metal dust made by gears in the gear box (2) without mechanical stress which may cause clacks of the cover (7).

FIG.1

## Protective case of tachometer generator

### FIELD OF THE INVENTION AND RELATED ART STATEMENT

#### 1. FIELD OF THE INVENTION

The present invention relates generally to a tachometer generator.

#### 2. DESCRIPTION OF THE RELATED ART

A tachometer generator is used for the purpose of detecting the rotation of a rotary machinery. For example, it is attached to the periphery of a driving gear in a vehicle e.g. electric car.

The most important device of the tachometer generator is a coil part which generates an output voltage proportional to the number of rotation of the driving gear. The coil part is very elaborate, is easy to break by a mechanical shock, and is easily corroded by oil. In order to protect the coil part, the most portions of the coil part with pole piece and permanent magnet have been molded in synthetic resin as usual.

The above-mentioned molding has some disadvantages as mentioned below. Locally concentrated stress in the mold is liable to be set up due to complex shape of the coil part and other molded parts. With the heat cycle and vibration from driving power source of a car that make the stress and residual stress stronger, the mold is liable to make cracks therein and results in failure of accomplishing its protective function. The ends of pole pieces of the coil being the important sensing part of the tachometer, it cannot be molded because the mold layer is generally thick, and destroy the sensitivity. Even if the ends of core of the coil is molded with very thin layer for sensitivity, such a thin mold layer should have cracks easily originated from the above-mentioned stress. Diffusion of lubrication oil and metal dust made by the gears through the above-mentioned cracks and a gap between the molding and the core of coil causes corrosion of coil and a shortcircuit or insufficiency of insulation.

### OBJECT AND SUMMARY OF THE INVENTION

An object of the present invention is to provide a protective case of tachometer generator which has continuing protective effects against shocks, lubrication oil and filings in the above-mentioned harsh environment.

A protective case of tachometer generator in accordance with the present invention comprises
a gear box having a driving gear;
a tachometer generator mounted on said gear box in a manner that a sensing element of said tachometer generator is in a position of proximation to said driving gear; and
a non-magnetic cover fixed to said gear box in a manner to form a partition between said gear box and said tachometer generator.

Since the cover is not stuck on the surface of the tachometer generator like the prior art mold cover, the cover does not have the above-mentioned stress. Accordingly it makes no crack from such stress. All the surface of the tachometer generator is covered thereby disabling encroachment of lubrication oil.

During the long service time period of the machine, troubles of coils such as open circuit may happen, and further, the magnetic force of the permanent magnet may decrease. Apart from the prior art where necessary repairs or replacement of the coils or the permanent magnet is usually carried out by destroying the molding, in the present invention, the coils or the permanent magnet such as parts of the tachometer generator can be detached and repaired or replaced without destroying any related components.

In the invention, all the parts of the tachometer generator including the ends of the cores are covered with the cover against the driving gear. Accordingly the ends of the cores, which have very precisely finished never touch the driving gear while in assembling, and hence a high precision accurate sensitivity as designed is assured.

While the novel features of the invention are set forth particularly in the appended claims, the invention, both as to organization and content, will be better understood and appreciated, along with other objects and features thereof, from the following detailed description taken in conjunction with the drawings.

### BRIEF DESCRIPTION OF THE DRAWINGS

FIG.1 is a front view of wheels having a tachometer generator with a protective case of this invention.

FIG.2 is a cross-sectional view taken substantially along the lines II-II of FIG.1.

FIG.3 is an enlarged view of details of the tachometer generator taken from FIG.2.

FIG.4 is an enlarged cross-sectional view of details of a protective case of a tachometer generator showing another modification.

It will be recognized that some or all of the Figures are schematic representations for purposes of illustration and do not necessarily depict the actual relative sizes or locations of the elements shown.

## DESCRIPTION OF THE PREFERRED EMBODIMENT

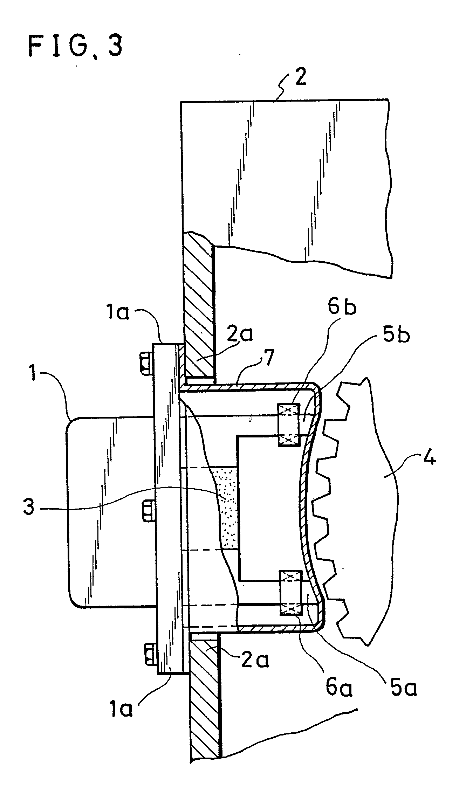

Hereafter the present invention is elucidated in detail with reference to the accompanying figures of FIG. through FIG.3 whereby the preferred embodiment are shown.

[Embodiment 1]

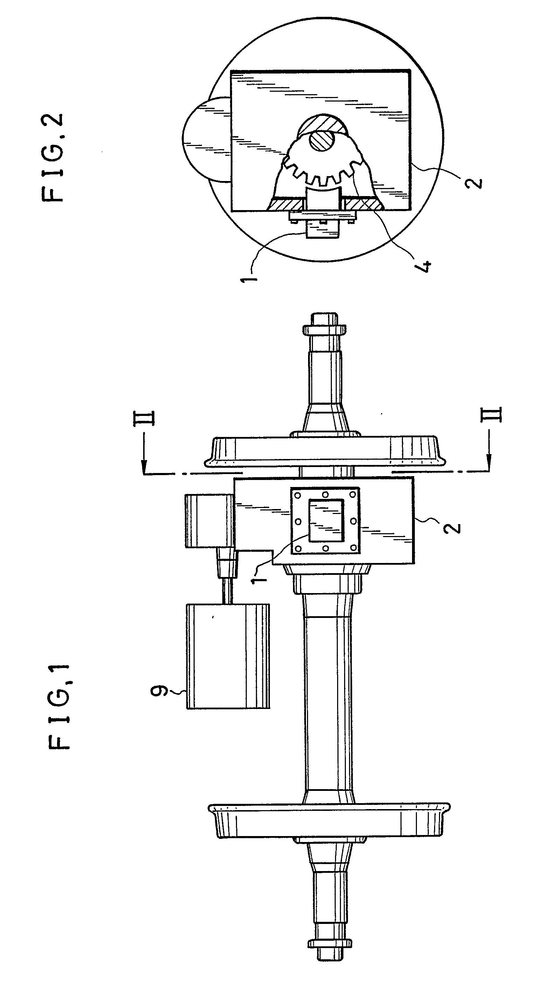

A first preferred embodiment of the present invention is elucidated hereafter with reference to FIG.1 through FIG.3.

A gear box 2 which is connected to a motor 9 of a car has a driving gear 4 therein. A tachometer generator 1 is removably mounted on the gear box 2 at flange joint 1a at the edge 2b of outer wall of the opening of the gear box 2. The tachometer generator 1 comprises a U-shaped yoke wherein a permanent magnet is situated at the central part 3 thereof. The end parts 5a, 5b of U-shaped yoke are a pair of pole pieces disposed parallel to each other. Respective ends of the iron cores 5a, 5b have coils 6a, 6b wounded therearound. A cover 7 made of non-magnetic material sheet covers and contains the tachometer generator 1 namely the permanent magnet 3, the pair of iron cores 5a, 5b with coils 6a, 6b therein without touching them, so as to protect the tachometer generator from lubrication oil and metal dust made by gears. The cover 7 is removably mounted on the gear box 2 by using flange joint 1a of the tachometer generator. The cover 7 also serves as partition between the gear box 2 and the tachometer generator 1 and is watertight.

A material of the cover 7 must have the properties of non-magnetism, high shock resistance, flame retardance, non hygroscopicity, and high oil resistance with a condition of wide range of working temperature such as -20°C--+120°C. A synthetic resin such as FRP (Fiber Reinforced Plastics) made of polyester resin is one of many materials which have the above-mentioned properties, and the cover 7 made of such resin is made as follows:
The cover 7 is molded in an integral body so as to agree with the shape of the tachometer generator comprising the permanent magnet 3, the iron cores 5a, 5b and the coils 6a, 6b by a cast. When mounted on the gear box 2 the cover 7 does not stick to none of the permanent magnet 3, the iron cores 5a, 5b or the coils 6a, 6b, thus stress caused by a heat cycle or vibration of the motor is not amplified. Therefore there is no mechanical disadvantage by the provision of the cover 7. In order to detect the rotation of the driving gear 4, the part of the cover 7 which is situated between the ends of pole pieces 5a, 5b, namely the sensing element of the tachometer generator and the gear facing thereto should have such a thin thickness as about 1 mm or less, and other parts of the cover 7 may have a thickness of between 2 mm and 3mm. The thickness of about 1 mm is experimentally found most suitable in view of attaining high production yield to produce the cover 7 with maintaining the sensitivity of the signal generation and also excluding any pin-holes or other defects. Through our experiments, the thickness at least a range from 1 mm to 5mm is found to satisfy the above-mentioned both conditions. A non-magnetic metal such as aluminum is usable for a metallic material of the cover 7.

[Embodiment 2]

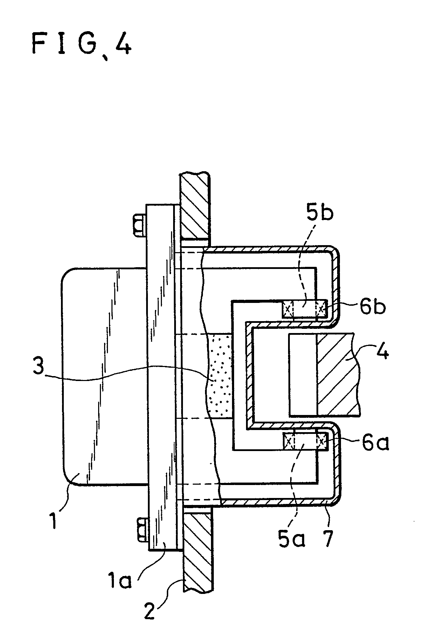

A second preferred embodiment of the present invention is elucidated hereafter with reference to FIG.4. Corresponding parts and components to the first embodiment are shown by the same numerals and marks, and the description thereon made in the first embodiment similarly apply. Differences and features of this second embodiment from the first embodiment are as follows. The relative disposition of the ends of the iron cores 5a, 5b and coils 6a, 6b and the running direction of teeth of the driving gear 4 differs. It is a matter of course that the effect of the cover 7 is as same as the above-mentioned Embodiment 1. In the Embodiment 2, the surface of the cover 7 which faces to the driving gear 4 is flat, while the surface corresponding to the cover 7 in the Embodiment 1 is cylindrical. Therefore the embodiment 2 has advantages that the flat surface can be made more precisely and that the gap between the cover 7 and the driving gear 4 can be made narrower than the Embodiment 1.

The cover 7 elucidated in the embodiment 1 and 2 covers a part of the tachometer generator 1 as a partition between the gear box 2 and the tachometer generator 1. It is a matter of course that the cover 7 can shelter all part of the tachometer generator 1 as a housing of the tachometer generator 1.

Although the invention has been described in its preferred form with a certain degree of particularity, it is understood that the present disclosure of the preferred form has been changed in the details of construction and the combination and arrangement of parts may be resorted to without departing from the spirit and the scope of the invention as hereinafter claimed.

## Claims

1. A protective case of tachometer generator comprising:
a gear box having a driving gear;
a tachometer generator mounted on said gear box in a manner that a sensing element of said tachometer generator is in a position of proximation to said driving gear; and
a non-magnetic cover fixed to said gear box in a manner to form a partition between said gear box and said tachometer generator.

2. A protective case of tachometer generator as claimed in claim 1 wherein said non-magnetic cover is made of synthetic resin.

3. A protective case of tachometer generator as claimed in claim 1 wherein said non-magnetic cover is made of non-magnetic metal.

4. A protective case of tachometer generator as claimed in claim 3 wherein said non-magnetic metal is a corrosion-resistive metal.

5. A protective case of tachometer generator as claimed in claim 1, 2, 3 or 4 wherein said non-magnetic cover is configured in a manner to contain said sensing element.

FIG.2

FIG.1

FIG.3

# FIG.4